# EUROPEAN PATENT APPLICATION

(11) **EP 3 170 610 A2**
(43) Date of publication of application: **24.05.2017**
(21) Application number: 15767194.2
(22) Date of filing: 17.07.2015
(51) Int. Cl.: B23K 26/00

(54) **METHOD FOR THE TREATMENT OF METAL, CERAMIC OR STONE SURFACES AND SURFACE THAT CAN BE OBTAINED USING THIS METHOD**

(30) Priority: 18.07.2014 ES 201431085
(71) Applicant: Wartsila Iberica S.A., 36475 Porriño (Pontevedra) (ES)
(72) Inventor: POU SARACHO, Juan Mª, 36475 Porriño (Pontevedra) (ES); DEL VAL GARCIA, Jesús, 36475 Porriño (Pontevedra) (ES); QUINTERO MARTINEZ, Felix, 36475 Porriño (Pontevedra) (ES); RIVEIRO RODRIGUEZ, Antonio, 36475 Porriño (Pontevedra) (ES); LUSQUIÑOS RODRIGUEZ, Fernando, 36475 Porriño (Pontevedra) (ES); COMESAÑA PIÑEIRO, Rafael, 36475 Porriño (Pontevedra) (ES); ABALDE LOPEZ, Alberto, 36475 Porriño (Pontevedra) (ES)
(74) Representative: Pons
(86) International application number: PCT/ES2015/070554
(87) International publication number: WO 2016/009103

(57) **Abstract**

The invention relates to a method for the treatment of metal, ceramic or stone surfaces, which can be used to obtain a surface with a high coefficient of friction, as well as to the metal, ceramic or stone surface that can be obtained using this method, said method comprising a step in which a laser beam is applied to the surface to be treated according to a pre-defined geometric pattern formed by lines.

## Description

### OBJECT OF THE INVENTION

The present invention relates to a method for the treatment of metal, ceramic or stone surfaces for obtaining a surface with a high friction coefficient, as well as the metal, ceramic or stone surface obtainable by said method.

The object of the invention is a method for the treatment of metal, ceramic or stone surfaces comprising a step of applying a laser beam on the surface to be treated in a predefined geometric pattern formed by lines.

### BACKGROUND OF THE INVENTION

A structured surface may be considered a "patterned" surface with a regular pattern of ridges and valleys that responds to a deterministic description although there are "structured" surfaces that do not have a regular morphology, but rather random (stochastic). The functions of the structured surfaces are varied although their application are mainly in tribology.

Many components of different types of machines operate under extreme lubrication conditions where the lubrication layer is too thin to completely separate the facing surfaces and, instantly, contact may occur between surface asperities. In extreme lubrication regimes, surface roughness and topography have significant influence on the tribological behaviour of the surfaces in contact. Thus, a small change in the roughness or topography can result in a significant modification of the tribological performance of contact surfaces.

While there are numerous applications based on reducing the friction between surfaces altering their texture, there are a small number of others where the increase of the friction coefficient between the contact surfaces is pursued; for which we have to control the texture thereof, more specifically the micro texture, since the order of magnitude of the geometric details that form it is micrometric.

An example of this application is the main propulsion shaft coupling system in boats or the like. Said transmission system is configured by all the elements present between the primary engine and the propeller, wherein its main function is to convert and transmit mechanical energy. This system thus transmits the torque generated by the linear motion of the pistons of the primary engine to the propeller and, secondly, the thrust generated by the propeller to the hull. The set of sections of shaft located within the boat are known as tailshaft.

Each of these sections have different diameters, as each interval will have to withstand different weights while transmitting different torques. For the union of the different shaft sections, couplings are used, cone jackets being widely used in shipbuilding due to their reliability, speed of assembly and disassembly and reduced maintenance. One of the properties of these couplings of great importance is the geometry of the union, a characteristic established between the dimensional ratio of its parts, length (L) and diameter (D). Cone jacket hydraulic couplings are a very simple method for connecting shafts.

Use of keyways or other mechanical connection elements hydraulically producing the establishment or release of the coupling is avoided, while it is not necessary to keep the external pressure of oil for the torque transmission. The compression applied to the conical element creates a radial inward force of constant magnitude on its perimeter, force which generates the connection by friction between the outer surface of the two shaft bodies and the inner surface of the conical sleeve. This coupling procedure establishes static friction coefficient (µ) values of between 0.13 and 0.15, wherein contact between the two shaft sections to be joined and the inner conical sleeve is disposed between smooth machined surfaces, while the friction values given here are defined within the rules of classification societies for steel-steel contact lubricated with oil.

The development of controllable pitch propellers, in which the axis of main propulsion went from solid to hollow to accommodate inside the mechanical or hydraulic components that execute the varying angle of attack on the blades, promoted the development coupling in which a lower contact pressure on shaft sections was required, so that to make the union effective, crushing would occur. Likewise the implementation of several of these coupling elements along a tailshaft means the presence of large masses coupled to the system in rotation, which causes the generation of significant inertia and problems for static and dynamic balancing.

For these reasons, if the pressure and weight of the assembly parts is reduced while maintaining the force transmitted by the union for which, first, it is necessary to reduce its length and lessen the amount of mass provided in the most remote places of axis rotation of the system, both of which adversely affect the clamping force exerted by the coupling.

First, according to the definition of force and pressure applied per unit area, F = P · S (wherein F = force [N] P = pressure [N / m²] and S = surface [m²]), the availability of a smaller surface means less clamping force applied to the coupling system.

Secondly, a lower wall thickness of the outer conical sleeve means less contact pressure applied by a mechanical weakening of the system.

This leads to a lower value than the normal component of force existing in the direction perpendicular to the axial axis of the system. According to the Coulomb friction theory, F=µN (wherein F = force [N] µ = coefficient of static friction and N = normal [N]), a lower Normal disposed also implies a lower clamping force applied to the coupling system.

Therefore, the most common way to improve the design of the coupling systems of naval shafts form is achieved by increasing the value of the static friction coefficient (µ) between the contacting surfaces, that is, the inner surface of the inner conical sleeve and the outer surface of the shaft ends to be coupled.

Thus, as a general practice in the field of naval component construction, to increase the coefficient of friction of the system, the projection of small particles of amorphous pattern (0.02-0.03 microns) of different materials (WC (Tungsten carbide) -Co-Cr, Ni-Cr-Cr3C2, WC-Co, Ni-base superalloys, Co-base superalloys, etc.) is performed by thermal spraying techniques (HVOF, stands for high velocity oxygen fuel). This process involves very favourable advantages but also presents a number of disadvantages that affect the operation and handling of the couplings.

In the application of WC (tungsten carbide), by means of HVOF of conical jacket coupling systems, known accordingly as high friction systems, the approved values of coefficient of static friction (µ) usually reached are 0.30. This increase in the coefficient of friction has been a great improvement in the performance of such couplings and based on this its size has been reduced. Thus, for the same shaft diameter, using high friction couplings generated from the projection of WC particles by HVOF processes, it can be concluded that a significant decrease in length (-42%) a significant reduction in weight (-52%), a significant reduction in inertia (-55%) and a significant increase in the transmitted torque (+ 23%) are achieved.

Moreover, for the case of conical jacket coupling systems for naval shafts, the use of such WC coatings using HVOF has the following disadvantages:
- The method is based on projecting hard particles on the inner surface of the inner conical sleeve, with a very strong transition area between the substrate and the coating that reduces the mechanical properties of the assembly.
- It is difficult to guarantee an exact dimension, with problematic installation processes due to irregular surfaces. The thickness of the coating applied by HVOF is not homogeneous and may reach 0.05 mm at points. This implies that the sliding operation of the shaft inside the coupling is much more difficult due to the strangulation of the already narrow clearance margin.
- High risk of damage to the coating during installation and uninstallation. During disassembly of the system conducted in repair and / or maintenance operations, the friction caused between the surfaces causes the loss of a large percentage of the material applied, whereby when retightening the coupling on the shaft, the initial conditions of the system do not remain, thus slowing the initial friction coefficient.
- The use of high pressures causes some particles to remain embedded in the shaft by loosening the clamping system, which increases the difficulty of second assembly and disassembly operations.
- The limited internal diameters of the parts to be treated condition the coating process, the use of this technique for this application is relatively recent and adjustment of parameters needs specific knowledge.

The above procedure has the disadvantages of the absence of geometrical uniformity of a coating, the lack of repeatability of the production process of coatings and the low coating adhesion.

An alternative to the above procedure is the blasting of the conical surface with alumina particles at high speed. Although the improvement of the friction coefficient value obtained is similar to that of the above procedure, surface contamination with embedded alumina particles and the lack of repeatability of the process due to recycling of alumina particles also advise against this procedure.

### DESCRIPTION OF THE INVENTION

The present invention relates to a method for the treatment of metal, ceramic or stone surfaces for obtaining a surface with a high friction coefficient, and the metal, ceramic or stone surface obtainable by said method.

The method for the treatment of metal surfaces comprising a step of applying a laser beam to the surface to be treated in a predefined geometric pattern formed by lines to form channels on the surface to be treated, wherein the wavelength of the laser beam is within the range 532 nm to 10064 nm.

The average power is within the range 3 W to 100 kW, and the pulse width within the range of 3 ns to 500 ns, so that the obtainable surface comprises channels with widths in the range 0.01 mm to 0.5 mm, a depth between 0.001 mm and 0.1 mm and a distance between channels of 0.1 mm to 1 mm. Preferably, the average power is within the range 3 W to 100 W, and the pulse width within the range of 3 ns to 500 ns, so that the obtainable surface comprises channels with widths in the range 0.01 mm to 0.1 mm, a depth between 0.001 mm and 0.05 mm and a distance between channels of 0.100 mm to 0.500 mm.

Optionally, the step of applying a laser beam on the surface to be treated in a predefined geometric pattern formed by lines, which may optionally be straight or curved, is performed in one or two directions on the surface to be treated.

Optionally, the step of applying a laser beam on the surface to be treated in a predefined geometric pattern formed by lines, which may optionally be straight or curved, is applied by moving the laser beam, maintaining the surface stationary, or moving the surface to be treated, keeping the laser beam stationary or by moving both, wherein the moving element does so describing a linear and / or rotary movement.

Optionally, the step of applying a laser beam on the surface to be treated in a predefined geometric pattern formed by lines, which may optionally be straight or curved, comprises a sub step of redirecting the laser beam on the surface to be treated.

Optionally, the step of applying a laser beam on the surface to be treated in a predefined geometric pattern formed by lines, which may optionally be straight or curved, comprises a sub step of focusing the laser beam on the surface to be treated.

Optionally, the step of applying a laser beam on the surface to be treated in a predefined geometric pattern formed by lines, which may optionally be straight or curved, is carried out in the presence of an inert gas that prevents oxidation of the material close to the area of interaction between the laser beam and the surface to be processed, avoiding the presence of oxide on the surface to be processed and therefore its self-lubrication, which negatively affects the increase of the friction coefficient.

Optionally, the predefined geometric pattern formed by lines, which may optionally be straight or curved, followed by the laser beam applied to the surface to be treated is regular or irregular.

Optionally, the predefined geometric pattern formed by lines to form channels in the surface to be treated, fully or partially covers said surface to be treated.

With the method of the present invention, the surface thus obtained may be applied to those high friction couplings demanded in shipbuilding, industrial or similar industry and the method to obtain it allows generation of said surfaces on different types of metals or other materials with different geometries and with high repeatability reaching coefficient friction values over 0.30.

Furthermore, the method of the present invention allows generating surfaces with controlled micro texture on previously manufactured parts.

The method of the present invention allows generating surfaces with controlled micro texture without generating environmental pollution or toxic waste and can be integrated into a production line, for different geometries of parts, from flat, cylindrical surfaces with different diameters to regulated or warped surfaces.

The method of the present invention does not require further mechanical or chemical treatment. Waste products are minimal and can be easily aspirated from the work area

The method of the present invention provides greater durability of the treated surfaces, greater uniformity of the tribological properties across the surface area and greater repeatability of these properties for different surfaces treated according to the same processing parameters.

Thus, the surface obtainable with the method of the present invention comprises a regular pattern of interlocking channels arranged regularly or irregularly over the area to be treated. Micro texture generated on the surface ensures a high coefficient of friction when tested with another counterpart surface that need not have been treated.
Optionally, the shaped channels may have a pointed or rounded geometry. The paths of the channels may be straight or curved lines entwined together.

The method object of the present invention can be applied over the entire surface to be textured or on areas or "islands" spread over the entire surface.

Unlike other methods of the prior art, such as the method based on plasma spraying or blasting, the method of the present invention is a non-contact surface method which produces a regular or random texture with negligible surface damage and results independent of the mechanical properties of the material of the parts to be processed.

The proposed method in the present invention is characterized by a good controllability of the obtainable texture defined by the width and depth of the channels and the surface density thereof.

### DESCRIPTION OF THE DRAWINGS

To complement the description being made and in order to aid a better understanding of the characteristics of the invention according to a preferred practical embodiment thereof, attached as an integral part of said description is a set of drawings wherein by way of example and without limiting the scope of the invention, the following has been represented:

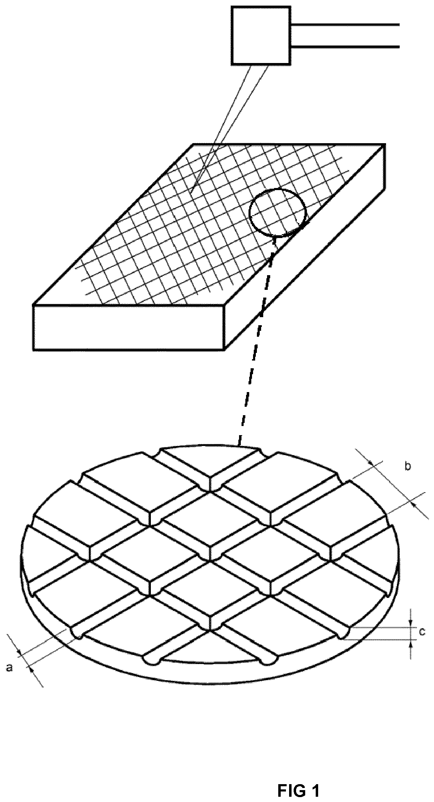

Figure 1 shows a surface on which the surface treatment method of the present invention is applied, in which the lower part shows a detail of the channels formed on the surface obtainable by applying the method of surface treatment of the present invention

### PREFERRED EMBODIMENT OF THE INVENTION

According to Figure 1, the present invention relates to a method for the treatment of metal, ceramic or stone surfaces for obtaining a surface with a high friction coefficient and the metal ceramic or stone surface obtainable by said method.

The method for the treatment of metal surfaces comprising a step of application to the surface to be treated of a laser beam (2) in a predefined geometric pattern consisting of lines, preferably straight or curved, for forming channels (1) on the surface to be treated wherein the wavelength of the laser beam (2) is within the range of 532 nm to 10064 nm, the average power within the range 3 W to 100 kW, and the pulse width within the range of 3 ns to 500 ns, so that the obtainable surface comprises channels (1) with widths (a) within the range of 0.01 mm to 0.5 mm, a distance (b) between the channels (1) of 0.1 mm to 1 mm, and a depth (c) between 0.001 mm and 0.1 mm. Preferably, the wavelength of the laser beam (2) is within the range of 532 nm to 10064 nm, the average power in the range of 3 W to 100 W, and the pulse width within the range of 3 ns to 500 ns, so that the obtainable surface comprises channels (1) with widths (a) within the range 0.01 mm to 0.1 mm, a distance (b) between the channels (1) of 0.100 mm to 0.500 mm and a depth (c) between 0.001 mm and 0.05 mm.

The step of applying a laser beam (2) on the surface to be treated comprises a sub step in which at least one of the following parameters is adjusted: average power of the laser beam (2), size of the laser beam (2) in focus, pulse width, wavelength, type of interaction (melting / vaporization), distance between channels (1) of predefined geometric pattern and number of scans per channel. These parameters are easily controllable and tuneable depending on the type of material to be treated with visible effects by determining the tribological parameters obtained, which are associated with the coefficient of friction.

The method further comprises a step of real-time monitoring of the surface texture obtainable in the step of application to the surface to be treated of a laser beam (2) with real-time measurement in which at least one of the parameters adjusted in the adjustment sub-step is readjusted.

Shown below are examples of application of different types of lasers with different powers, operating frequencies and scan rate of the same material (AISI9840) for different focal distances, wherein the first two examples show the use of a laser with a wavelength within the range of 532 nm to 1064 nm and the third example demonstrates the use of a fibre laser, wherein the wavelength is within the range of 1055 to 1070 nm and the laser power is about 100 W.

### EXAMPLE 1

An Nd laser was used: YVO₄ (532 nm) of 7 W average power, operating at 20 kHz, with a value of M² <1.2 and scanning rate of 50 mm / s on the surface (material AISI9840) operating with an effective focal length of 160 mm producing a micro texture which tested against homologous untreated surface provides a friction coefficient of 0.51. Its value after making 4 consecutive trials is 0.51.

### EXAMPLE 2

An Nd laser was used: YVO₄ (1064 nm) of 13 W average power, operating at 20 kHz, with a value of M² <1.2 and scanning rate of 50 mm / s on the surface (material AISI9840) operating with an effective focal length of 160 mm producing a micro texture which tested against a homologous untreated surface provides a friction coefficient of 0.52. Its value after making 4 consecutive trials is 0.54.

### EXAMPLE 3

A fibre laser (1055-1070nm) 100 W average power was used, operating at 100 kHz, with value a of M² <2.0 and scanning rate of 2200 mm / s on the surface (material AISI9840) operating with a focal length of 330 mm producing a micro texture which tested against a homologous untreated surface provides a friction coefficient of 0.72. Its value after performing 11 consecutive tests is 0.42.

In all three examples, the number of scans per channel (1) is four.

In Example 3, the variability of the coefficient of friction with the number of trials is due to the modification of the micro texture with testing, as for the combination of processing parameters, the channel (1) generation is primarily governed by a phenomenon material melting, accumulating resolidified material at the edges of the channel (1) with a maximum height of 0,008 mm. It is noted that in the first two examples, the predominant physical phenomenon is vaporization of the material, with barely any presence of resolidified material whereby the micro texture remains unchanged even after several trials.

## Claims

1. Method for the treatment of metal, ceramic or stone surfaces, **characterized in that** it comprises a step of applying a laser beam (2) on the surface to be treated (3) in a predefined geometric pattern formed by lines to form channels (1) on the surface to be treated (3), wherein the wavelength of the laser beam (2) is within the range of 532 nm to 10064 nm.

2. Method for the treatment of metal, ceramic or stone surfaces according to claim 1, **characterized in that** the average power of the laser beam (2) is within the range of 3 W to 100 kW, and the pulse width within the range of 3 ns to 500 ns,

3. Method for the treatment of metal, ceramic or stone surfaces, according to claim 2, **characterized in that** the average power of the laser beam (2) is within the range of 3 W to 100 W.

4. Method for the treatment of metal, ceramic or stone surfaces according to any preceding claim **characterized in that** the step of applying a laser beam (2) on the surface to be treated (3) in a predefined geometric pattern formed by lines is carried out in one or two directions on the surface to be treated (3).

5. Method for the treatment of metal, ceramic or stone surfaces according to any preceding claim **characterized in that** the step of applying a laser beam (2) on the surface to be treated (3) in a predefined geometric pattern formed by lines is applied by moving the laser beam (2), keeping the surface to be treated (3) stationary.

6. Method for the treatment of metal, ceramic or stone surfaces according to any of claims 1 to 4 **characterized in that** the step of applying a laser beam (2) on the surface to be treated (3) in a predefined geometric pattern formed by lines is applied by moving the surface to be treated (3), keeping the laser beam (2) stationary.

7. Method for the treatment of metal, ceramic or stone surfaces according to either claim 5 or 6 **characterized in that** the moving element moves describing a linear and / or rotary motion.

8. Method for the treatment of metal, ceramic or stone surfaces according to any preceding claim **characterized in that** the step of applying a laser beam (2) on the surface to be treated (3) in a predefined geometric pattern formed by lines comprises a sub step of redirecting the laser beam (2) on the surface to be treated (3).

9. Method for the treatment of metal, ceramic or stone surfaces, according to any of claims 1 to 7 **characterized in that** the step of applying a laser beam (2) on the surface to be treated (3) in a predefined geometric pattern formed by lines comprises a step of focusing the laser beam (2) on the surface to be treated (3).

10. Method for the treatment of metal, ceramic or stone surfaces according to any preceding claim **characterized in that** the step of applying a laser beam (2) on the surface to be treated (3) in a predefined geometric pattern formed by lines is carried out in the presence of an inert gas atmosphere.

11. Method for the treatment of metal, ceramic or stone surfaces according to any preceding claim **characterized in that** the step of applying a laser beam (2) on the surface to be treated comprises a sub step in which at least one of the following parameters is adjusted: average power of the laser beam (2), size of the laser beam (2) at the focus, pulse width, wavelength, type of interaction either melting or vaporization, distance between channels (1) of the predefined geometric pattern and number of scans per channel.

12. Method for the treatment of metal, ceramic or stone surfaces, according to claim 11 **characterized by** further comprising a step of real-time monitoring of the surface texture obtainable in the step of application to the surface to be treated of a laser beam (2) with real-time measurement wherein at least one of the parameters adjusted in the adjustment sub-step is readjusted.

13. Method for the treatment of metal, ceramic or stone surfaces according to any preceding claim **characterized in that** the predefined geometric pattern formed by lines followed by the laser beam (2) applied to the surface to be treated (2) is regular.

14. Method for the treatment of metal, ceramic or stone surfaces, according to any of claims 1 to 12 **characterized in that** the predefined geometric pattern formed by lines followed by the laser beam (2) applied to the surface to be treated (2) is irregular.

15. Method for the treatment of metal, ceramic or stone surfaces according to any preceding claim **characterized in that** the lines are straight or curved.

16. Method for the treatment of metal, ceramic or stone surfaces according to any preceding claim **characterized in that** the predefined geometric pattern formed by lines to form channels (1) on the surface to be treated (3), completely or partially covers said surface to be treated (3).

17. Surface obtainable by the method of any of the preceding claims.

18. Surface obtainable by the method of claim 2 **characterized in that** it comprises a channel (1) with a width (a) within the range of 0.01 mm to 0.5 mm, a distance (b) between the channels (1) of 0.100 mm to 1 mm and a depth (c) between 0.001 mm and 0.1 mm

19. Surface obtainable by the method of claim 3 **characterized in that** it comprises a channel (1) with a width (a) within the range 0.01 mm to 0.1 mm, a distance (b) between the channels (1) of 0.100 mm to 0.500 mm and a depth (c) between 0.001 mm and 0.05 mm.

20. Surface according to any of claims 17 to 19 **characterized in that** the channels (1) formed have a pointed shaped geometry.

21. Surface according to any of claims 17 to 19 **characterized in that** the channels (1) formed have a rounded shaped geometry.

22. Surface according to any of claims 17 to 21 **characterized in that** the coefficient of friction is greater than 0.30.
